Europäisches Patentamt

European Patent Office

Office européen des brevets

(11) Numéro de publication: **0 306 430 B1**

# FASCICULE DE BREVET EUROPEEN

(45) Date de publication de fascicule du brevet: **19.11.92**    (51) Int. Cl.⁵: **B09B 3/00**

(21) Numéro de dépôt: **88460020.6**

(22) Date de dépôt: **01.09.88**

(54) **Procédé et machine de traitement des déchets hydrocarbonés.**

(30) Priorité: **03.09.87 FR 8712340**

(43) Date de publication de la demande:
**08.03.89 Bulletin 89/10**

(45) Mention de la délivrance du brevet:
**19.11.92 Bulletin 92/47**

(84) Etats contractants désignés:
**BE DE FR GB IT LU NL**

(56) Documents cités:
**DE-A- 1 767 685**
**FR-A- 2 232 517**
**US-A- 4 079 003**
**US-A- 4 514 307**

(73) Titulaire: **Moulinec, Henri Jacques-Marie**
**129 boulevard Gambetta**
**F-29480 Le Relecq-Kerhuon(FR)**

(72) Inventeur: **Moulinec, Henri Jacques-Marie**
**129 boulevard Gambetta**
**F-29480 Le Relecq-Kerhuon(FR)**

(74) Mandataire: **Dubreuil, Annie et al**
**Cabinet Ballot-Schmit, Immeuble Le Suffren,**
**23 rue des Peupliers**
**F-56100 Lorient(FR)**

## Description

La présente invention concerne un nouveau procédé de traitement des déchets ou résidus polluants contenant des huiles et matières grasses d'origine minérale, c'est-à-dire des hydrocarbures ainsi que des graisses végétales et animales.

Au stade actuel de l'art connu, le traitement des déchets ou résidus hydrocarbonés se fait suivant leurs natures :
- par voie chimique ;
- par voie physique ;
- par un traitement à la chaux vive en poudre.

Cependant, la technique de la chaux vive présente certains inconvénients, surtout lorsqu'elle est appliquée dans des endroits pluvieux et venteux. De plus, la manipulation de la chaux vive à granulométrie fine pose toujours de très gros problèmes de sécurité. Et même si la sécurité est assurée, avec la chaux vive en poudre, la réaction exothermique est très lente puisque des durées de l'ordre de quinze jours sont nécessaires.

Le document US-A-4 079 003 divulgue une technique dans laquelle la chaux vive est utilisée sous forme de particules de la grosseur d'un grain de blé. Là encore, le temps de traitement reste long, puisque de l'ordre de quarante-huit heures, auxquelles s'ajoute une période de séchage de plusieurs semaines.

La présente invention a pour but de pallier ces inconvénients et concerne un procédé de traitement consistant à incorporer aux résidus hydrocarbonés un granulat d'oxyde de calcium anhydre non plus en poudre ou en fins granulés, mais au contraire sous forme de granulat, voire même de roche ou de cailloux d'une réactivité plus ou moins importante. La réaction chimique exothermique transforme alors les déchets en un produit hydrophobe peu organique , non polluant, conforme aux normes en vigueur pour la mise en décharge, facilement stockable et compactable, et ceci suite à un traitement de durée courte de l'ordre de quelques heures.

L'invention concerne, basées sur le même procédé, deux techniques :
- la première relative à un traitement réalisé à ciel ouvert sur une aire de traitement, et nécessitant comme équipement un matériel classique tel que celui qui est utilisé en agriculture ou dans les travaux publics ;
- la seconde relative à un traitement réalisé dans une machine spécialement conçue à cet effet.

Le procédé selon l'invention se différencie également en deux variantes, selon qu'il s'agit de résidus pétroliers ou de déchets provenant des machines-outils, par exemple des laminoirs, variantes dont la mise en oeuvre peut se faire à ciel ouvert ou à l'aide de ladite machine.

Tel que défini par la revendication indépendante du jeu annexé, dont le préambule est établi sur la base du document US-A-4 079 003,

un procédé de traitement de déchets ou résidus hydrocarbonés avec de l'oxyde de calcium anhydre, consistant à :
- e) mélanger ces déchets avec de l'oxyde de calcium en granulats ;
- g) malaxer le mélange ;
- h) laisser se développer la réaction exothermique ;

est caractérisé en ce que le granulat utilisé comporte moins de 3 % de grains de calibre inférieur à 3 mm, et contient par ailleurs des particules de calibre pouvant atteindre 140 mm, et en ce que la granulométrie moyenne et la réactivité dudit granulat sont choisies en fonction du substrat à traiter pour que ladite réaction exothermique ait une durée comprise entre un quart d'heure, environ, et trois heures, environ, et qu'à son terme le produit résultant soit à l'état final désiré.

L'invention concerne également une machine équipée de moyens, et notamment d'un couvercle, permettant la mise en œuvre du procédé selon l'invention.

L'invention sera mieux comprise à la lecture des explications qui vont suivre et des figures jointes parmi lesquelles:
- la figure 1 est une vue de derrière de la machine selon l'invention;
- la figure 2 est une vue latérale de la machine de la figure 1;
- la figure 3 est une vue de dessus de la dite machine.

Pour plus de clarté, les mêmes éléments portent les mêmes références sur toutes les figures.

Le procédé conforme à l'invention, appliqué au traitement des résidus pétroliers selon la technique dite à ciel ouvert, comporte les étapes suivantes qui consistent à:
- a) Confectionner une aire de traitement: il s'agit de réaliser une aire telle que le produit à traiter puisse être répandu, mais comportant une étanchéité telle que la nappe phréatique ne puisse être contaminée; les aires doivent être circulables aux engins.
- b) Répandre sur l'aire une couche de résidus hydrocarbonés.
- c) Travailler le résidu hydrocarboné de façon à obtenir un mortier plastique, c'est-à-dire un produit à la limite entre l'état solide et l'état liquide; ce mortier plastique est obtenu:
  - soit en ajoutant au résidu une matière d'agrégation que l'on trouvera à proximité du lieu de traitement (sables, terres, cendres volantes ou produits d'usine d'incinération);

2

- soit en liquéfiant le résidu;
- soit en le triturant ou le malaxant.

d) Etendre le mortier plastique en planches d'épaisseur de 20 à 40 centimètres.

e) Répandre en une ou plusieurs opérations, sur le mortier plastique, une couche de granulat d'épaisseur calculée sur planche d'essai; le granulat est un concassé d'oxyde de calcium anhydre à faible surface spécifique, comportant moins de 3 % de grains inférieurs à 3 mm; différentes dimensions de granulat sont utilisées suivant la nature et la consistance des produits à traiter et suivant les conditions atmosphériques (ex: 3/7, 7/15, 15/30, 7/40); pour certains types de résidus, ces granulats se présentent même sous la forme de roches ou de cailloux d'une réactivité plus ou moins importante.

f) Recouvrir le granulat de 0,10 cm de matière d'agrégation (sable, terre, cendres, produits issus d'usines d'incinération, de produits préalablement traités), ou l'incruster dans le résidu, ce qui servira de couvercle et protègera l'oxyde de calcium anhydre des intempéries et constituera une isolation thermique favorable à activer les réactions.

g) Malaxer.

h) Laisser la réaction exothermique se réaliser avec contrôle de température (de 1/4 d'heure à 3 heures).

i) Faire un contrôle primaire: le produit final doit être hydrophobe, c'est-à-dire imperméable à l'eau.

j) Procéder à des prélèvements pour contrôle de laboratoire.

k) Homogénéiser le résidu traité, le ramasser, le stocker et récupérer l'aire de travail.

l) Si besoin est, utiliser les résidus hydrophobés pour la confection d'autres aires de travail dont l'étanchéité sera assurée par un bon compactage.

Il y a selon l'invention quatre étapes essentielles qui sont:

- le mélange des résidus avec l'oxyde de calcium anhydre ou chaux vive en granulat comportant moins de 3 % de grains inférieurs à 3mm;
- la mise en place d'un couvercle;
- le malaxage;
- le développement de la réaction exothermique.

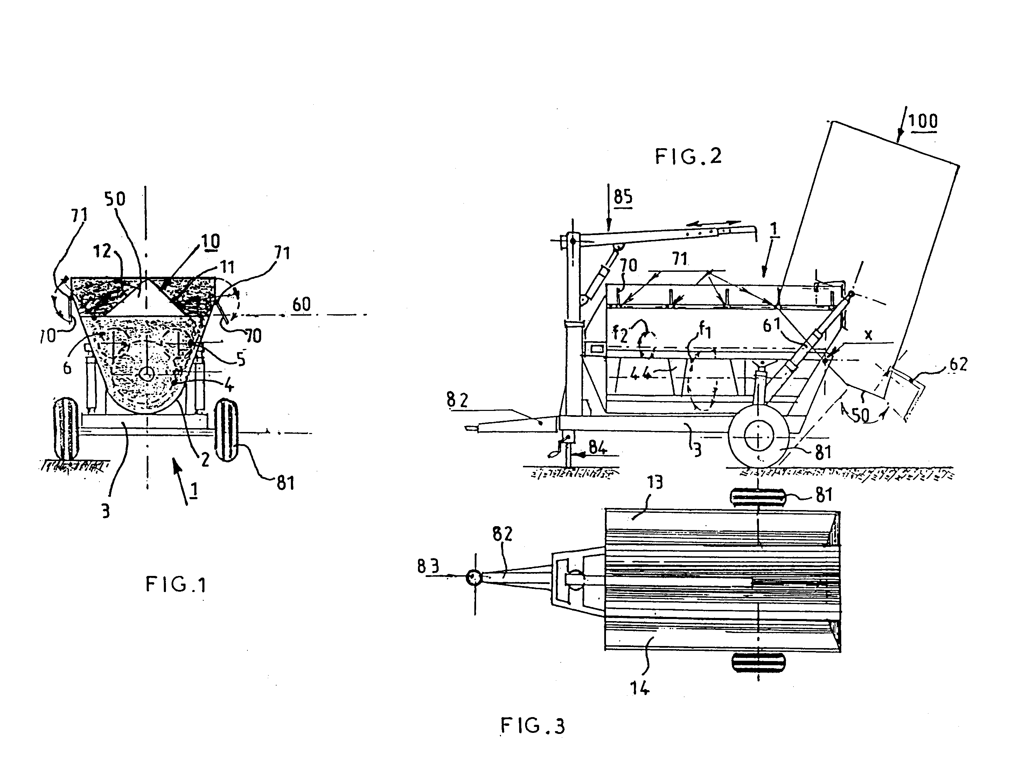

La combinaison de ces étapes essentielles, au lieu d'être réalisée à ciel ouvert, peut, conformément à l'invention et comme cela a été dit précédemment, être mise en œuvre dans une machine décrite ci-après et illustrée au moyen des figures 1, 2 et 3.

Une telle machine (1) est essentiellement constituée d'une cuve (2) en forme de "V" montée sur un châssis (3) roulant qui peut être attelé par exemple à un tracteur (non représenté).

La cuve (2) est destinée à recevoir les résidus à traiter et elle est équipée d'un jeu de rotors (4, 5, 6) dont les fonctions seront précisées ultérieurement.

Selon une caractéristique importante de l'invention, un couvercle (10) est mis en place au dessus de la cuve (2). Il est en forme de "V" renversé et amovible. Il a pour fonction notamment de répartir les matériaux tels que le produit réactif (cailloux d'oxyde de calcium défini précédemment) que l'on déverse au dessus du couvercle et qui glisse sur chacune des pentes (11) et (12) du "V" renversé pour tomber à travers des lumières (13) et (14), dans la cuve (2). Une autre de ses fonctions essentielles est d'une part de contenir la réaction pendant le traitement en évitant les débordements car, lors de la réaction, le mélange (déchet/matériau réactif) gonfle; d'autre part, de permettre une économie substantielle d'adjuvant et de réduire la durée du traitement. En effet, la présence de ce couvercle, comme de celui qui est mis en place dans le cadre de la technique de traitement à ciel ouvert, favorise la réaction exothermique en évitant au maximum toute déperdition de chaleur. Ce couvercle (10) protège également le contenu de la cuve contre les intempéries et les éclaboussures pendant le déplacement de la machine.

Enfin, de par sa forme en "V", il présente à son extrémité arrière une ouverture servant de cône de déversement (50) pour le résidu traité, ce cône étant obturé pendant le traitement par une porte de vidange (62).

La cuve (2) et ses accessoires sont par exemple montés sur un châssis (3) équipé de roues (81), d'un attelage (82) avec un anneau de traction (83), d'une béquille de repos (84) et éventuellement d'un système de grue (85) pour le chargement en produit à traiter et/ou en oxyde de calcium anhydre. Tout cet ensemble est réalisé pour répondre aux normes routières en vigueur. Des ridelles (70) montées sur charnières (71) pour être rabattables sont également prévues.

Le premier rotor à axe longitudinal (4) est muni de peignes (44), tournant dans le sens symbolisé par les flèches (f1). Il a pour fonction de malaxer le mélange en cours de traitement. Le couple de deux rotors (5) et (6) à axe longitudinal, équipés de palettes réparties le long de chaque rotor selon un écartement compatible avec la configuration des peignes (44), assure un broyage du matériau réactif lors de son déversement mais surtout homogénéise le mélange qui, en cours de traitement, a tendance à gonfler. Le sens de rotation de l'un de ces rotors est symbolisé par les flèches (f2).

Le procédé de traitement de résidus hydrocar-

bonés mis en œuvre au moyen de la machine (1) décrite ci-dessus se déroule selon les étapes principales énoncées ci-après:

- mise en place du couvercle (10);
- remplissage de la cuve (2) jusqu'à un niveau maximal (60) en produit à traiter en déversant sur le couvercle amovible;
- mise en route du rotor (4) malaxeur pour homogénéiser le produit à traiter;
- déversement sur le couvercle (10) d'une quantité suffisante de chaux vive se présentant conformément à l'invention, sous forme de roche dite granulat concassé, calibré de 5 à 140 mm et, en tout état de cause, comportant moins de 3 % de grains inférieurs à 3 mm, la granulométrie de l'oxyde de calcium anhydre étant choisie en fonction du type de résidu traité;
- obtention d'un gonflement de l'ensemble durant la réaction exothermique et mise en action du couple de rotors (5, 6) pour casser, broyer, homogénéiser le mélange en cours de réaction, cette action coopérant également avec celle du couvercle (10) et des ridelles (70) pour empêcher tout débordement.

A titre d'exemple, pour le traitement d'une tonne de déchet de 15 à 30 % d'hydrocarbure, le Demandeur utilise 52 à 55 % d'oxyde de calcium pour obtenir un produit solide répondant aux normes en vigueur. La durée de traitement pour cet exemple est compris entre 15 et 20 minutes.

Ensuite, on lève la cuve (2) comme le montre la figure 2, pour la mettre en position de déversement (symbolisé par le rectangle 100) et ceci en agissant sur le vérin (61) autour de l'axe de basculement (x), puis on libère la porte de vidange (62) pour découvrir le cône de déversement (50).

Après avoir décrit les techniques de traitement à ciel ouvert puis au moyen de la machine (1) conforme à l'invention pour les résidus hydrocarbonés pétroliers, on décrit maintenant ces techniques pour les déchets provenant des machines-outils et notamment des laminoirs.

Dans la technique à ciel ouvert, les étapes consistent à:

a) Aménager une aire de traitement de façon à pouvoir y répandre le résidu à traiter, mais comportant une étanchéité telle que la nappe phréatique ne puisse être contaminée. Les aires doivent être circulables aux engins.

b) Etendre le résidu hydrocarboné en planches d'épaisseur de 20 à 40cm.

e) Etaler le granulat ou concassé d'oxyde de calcium anhydre à faible surface spécifique, comportant moins de 3 % de grains inférieurs à 3 mm et maintenir suivant la nature et la consistance des produits à traiter et suivant les conditions atmosphériques (ex: 3/7, 7/15, 15/30, 7/40).

g) Malaxer.

h) Laisser la réaction exothermique se réaliser avec contrôle de température (de 1/4 d'heure à 3 heures).

i) Procéder à un contrôle primaire; le produit final est pratiquement hydrophobe.

k) Faire des prélèvements pour contrôle de laboratoire. Le produit obtenu correspondant aux normes en vigueur pour mise en décharge. Dans ce cas, l'homogénéiser, le ramasser, le stocker et récupérer l'aire de travail.

l) Le produit ainsi obtenu doit subir un traitement thermique complémentaire jusqu'à la disparition des fumées; les hydrocarbures sont alors éliminés et le produit obtenu peut être réutilisé en industrie.

Dans le cas où, pour cette variante, la machine (1) conforme à l'invention est mise en application, le procédé de mise en œuvre décrit pour la variante relative aux résidus pétroliers reste valable. Seuls les paramètres tels que la granulométrie de l'oxyde de calcium anhydre, les pourcentages, la durée du traitement doivent être adaptés. Ensuite, comme pour la technique à ciel ouvert, l'étape (1), c'est-à-dire le traitement thermique complémentaire, est réalisée.

La mise en œuvre d'oxyde de calcium sous forme de granulat de dimension supérieure à 3 mm, contrairement aux idées reçues exploitées dans l'art connu où l'on recherche toujours la plus grande surface spécifique possible, conduit à l'obtention d'une réaction plus rapide et plus complète. La présence d'un couvercle, tant dans la technique dite à ciel ouvert que dans celle qui met en œuvre la machine selon l'invention, favorise le bon déroulement de la réaction et en accélère le processus.

L'invention s'applique au traitement de tous déchets pétroliers et/ou provenant de machines-outils, etc...

**Revendications**

1. Procédé de traitement de déchets ou résidus hydrocarbonés avec de l'oxyde de calcium anhydre, consistant à :

   e) mélanger ces déchets avec de l'oxyde de calcium en granulats;

   g) malaxer le mélange;

   h) laisser se développer la réaction exothermique,

   caractérisé en ce que le granulat utilisé comporte moins de 3 % de grains de calibre inférieur à 3 mm, et contient par ailleurs des particules de calibre pouvant atteindre 140 mm, et en ce que la granulométrie moyenne et la réactivité dudit granulat sont choisies en fonction du substrat à traiter pour que ladite réaction exothermique ait une durée comprise entre un quart d'heure, environ, et trois heures, environ, et qu'à son terme le produit résultant soit à l'état final désiré.

2. Procédé de traitement selon la revendication 1, caractérisé en ce qu'il consiste en outre, entre les étapes (e) et (g), à :
   f) mettre en place un couvercle.

3. Procédé de traitement selon la revendication 1 ou 2, caractérisé en ce qu'il est mis en oeuvre sur une aire de traitement à ciel ouvert.

4. Procédé de traitement selon l'une des revendications 2 ou 3, caractérisé en ce que la mise en place (f) d'un couvercle est réalisée à l'aide d'un matériau d'agrégation, tels que le sable, la terre, des cendres, des produits issus d'usine d'incinération.

5. Procédé de traitement selon la revendication 1, caractérisé en ce qu'il est appliqué aux résidus de machine-outils, notamment des laminoirs.

6. Procédé de traitement selon la revendication 5, caractérisé en ce qu'il comprend une étape supplémentaire (1) consistant en un traitement thermique jusqu'à disparition des fumées du produit obtenu au terme de la réaction exothermique de l'étape (h).

7. Machine servant à la mise en oeuvre du procédé selon les revendications 1, 2, 4 ou 5, caractérisé en ce qu'elle comporte une cuve (2) en forme de "V" équipée de rotors (4, 5, 6), destinée à recevoir le produit à traiter et l'oxyde de calcium, la cuve (2) étant recouverte par un couvercle (10) en forme de "V" inversé dont les fonctions sont :
   - la répartition dans la cuve (2) par chacune de ses pentes 11 et 12 de l'oxyde de calcium,
   - l'isolation thermique favorisant le bon déroulement de la réaction exothermique,
   - la protection contre les intempéries et les éclaboussures pendant le déplacement de la machine.

8. Machine selon la revendication 7, caractérisée en ce que le rotor (4) est prévu pour assurer le malaxage du mélange dans la cuve (2), et le couple de rotors (5, 6) pour assurer le broyage et l'homogénéisation du mélange qui gonfle durant la réaction exothermique.

9. Machine selon la revendication 7 ou 8, caractérisée en ce que la cuve (2) est montée apte à basculer autour d'un axe de basculement (X) et en ce qu'elle comprend un cône de déversement (50) constitué par la face arrière du couvercle (10), pourvu d'une porte de vidange (62).

10. Machine selon l'une des revendications 7 à 9, caractérisée en ce que la cuve (2) est montée sur un châssis (3) roulant et comportant un attelage (82).

## Claims

1. A method for the treatment of hydrocarbon containing wastes or residues with anhydrous calcium oxide consisting of:
   e) mixing such waste with calcium oxide in granule form;
   g) milling the mixture;
   h) allowing the exothermic reaction to develop,
   characterized in that the granules employed comprise at least 3 % of granules with a size under 3 mm and contain furthermore lumps with a size which may extend up to 140 mm and in that the mean size and the reactivity of the said granules are selected as a function of the substrate to be treated so that the said exothermic reaction lasts between approximately one quarter of an hour and approximately three hours and in that on termination the resulting product has the desired final condition.

2. The method of treatment as claimed in claim 1, characterized in that it furthermore consists of the following step between the steps (e) and (g):
   f) putting a cover in place.

3. The method of treatment as claimed in claim 1 or 2, characterized in that it is practiced in an outdoor open treatment area.

4. The method of treatment as claimed in claim 2 or claim 3, characterized in that the putting into position of a cover (f) is performed by means of an aggregation material such as sand, earth, ashes or products from an incinerating plant.

5. The method of treatment as claimed in claim 1, characterized in that it is performed on waste from machine tools, and more particularly from rolling mills.

6. The method of treatment as claimed in claim 5, characterized in that it comprises a supplementary stage (1) consisting of a thermal treatment performed until there are no longer any fumes from the product produced at the termination of the exothermic reaction of the step (h).

7. A machine for performing the method as claimed in any one of the claims 1, 2, 4 or 5, characterized in that it comprises a vat (2) with a "V"-like form fitted with rotors (4, 5, 6) destined to receive the product to be treated and the calcium oxide, said vat (2) being covered by a cover (10) in the form of an inverted "V" with the following functions:
- the distribution in the vat (2) of the calcium oxide by each of its slopes 11 and 12,
- thermal insulation favoring proper conduct of the exothermic reaction, and
- protection against the effects of exposure to the atmosphere and splashing during moving the machine from place to place.

8. The machine as claimed in claim 7, characterized in that the rotor (4) is provided in order to ensure the milling of the mixture in the vat (2) and the pair of rotors (5, 6) in order to ensure grinding and homogenization of the mixture, which expands during the exothermic reaction.

9. The machine as claimed in claim 7 or claim 8, characterized in that the vat (2) is mounted so as to pivot about a swivelling axis (X) and in that it comprises a discharge cone (50) constituted by the back side of the cover (10) and provided with an outlet door (62).

10. The machine as claimed in any one of the claims 7 through 9, characterized in that the vat (2) is mounted on a wheeled chassis (3) having a hitch (82).

**Patentansprüche**

1. Verfahren zur Behandlung kohlenwasserstoffhaltiger Abfälle oder Rückstände mit wasserfreiem Kalziumoxid, welches darin besteht, daß
    e) diese Abfälle mit Kalziumoxid in Form von Granulaten vermischt werden;
    g) das Gemisch durchgeknetet wird;
    h) man die exotherme Reaktion sich entwickeln läßt,
dadurch gekennzeichnet, daß das verwendete Granulat weniger als 3 % Körner einer Größe unter 3 mm umfaßt und im übrigen Teilchen einer Größe enthält, welche 140 mm erreichen kann, und dadurch, daß die mittlere Korngröße und die Reaktivität des Granulats in Abhängigkeit von dem zu behandelnden Substrat gewählt werden, damit die exotherme Reaktion innerhalb eines Zeitraums von zwischen etwa einer viertel Stunde und etwa drei Stunden abläuft und das entstehende Produkt bei ihrem Ende den gewünschten Endzustand besitzt.

2. Behandlungsverfahren nach Anspruch 1, dadurch gekennzeichnet, daß es zusätzlich darin besteht, daß zwischen den Stufen (e) und (g)
    f) eine Abdeckhaube angebracht wird.

3. Behandlungsverfahren nach Anspruch 1 oder 2, dadurch gekennzeichnet, daß es über einer Behandlungsfläche unter freiem Himmel durchgeführt wird.

4. Behandlungsverfahren nach einem der Ansprüche 2 oder 3, dadurch gekennzeichnet, daß das Anbringen (f) einer Abdeckhaube mit Hilfe eines Zuschlagstoffes wie Sand, Erde, Aschen, aus Verbrennungsanlagen stammende Stoffe durchgeführt wird.

5. Behandlungsverfahren nach Anspruch 1, dadurch gekennzeichnet, daß es auf Rückstände von Werkzeugmaschinen, insbesondere von Walzwerken, angewandt wird.

6. Behandlungsverfahren nach Anspruch 5, dadurch gekennzeichnet, daß es eine zusätzliche Stufe (1) umfaßt, die aus einer Wärmebehandlung bis zum Verschwinden von Dämpfen des erhaltenen Produkts am Ende der exothermen Reaktion der Stufe (h) besteht.

7. Vorrichtung zur Durchführung des Verfahrens gemäß den Ansprüchen 1, 2, 4 oder 5, dadurch gekennzeichnet, daß sie eine V-förmige, mit Rotoren (4, 5, 6) ausgerüstete Wanne (2) für die Aufnahme des zu behandelnden Produkts und des Kalziumoxids umfaßt, wobei die Wanne (2) mit einer Abdeckhaube (10) in Form eines umgedrehten "V" abgedeckt ist, deren Funktionen die folgenden sind:
    - Die Verteilung des Kalziumoxids in der Wanne (2) durch jede ihrer Schrägen 11 und 12,
    - die Wärmeisolierung, die den guten Verlauf der exothermen Reaktion begünstigt,
    - der Schutz gegen Witterungseinflüsse und Spritzer während des Versetzens der Vorrichtung.

8. Vorrichtung nach Anspruch 7, dadurch gekennzeichnet, daß der Rotor (4) dafür eingerichtet ist, das Durchkneten des Gemisches in der Wanne (2) sicherzustellen, und das Rotorpaar (5, 6) dafür eingerichtet ist, die Zerkleinerung und Homogenisierung des Gemisches, das sich während der exothermen Reaktion aufbläht, sicherzustellen.

9. Vorrichtung nach Anspruch 7 oder 8, dadurch gekennzeichnet, daß die Wanne (2) um eine Schwenkachse (X) schwenkbar befestigt ist, sowie dadurch, daß sie einen durch die Rückseite der Abdeckung (10) gebildeten Schütttrichter (50) umfaßt, der mit einer Entleerungsklappe (62) versehen ist.

10. Vorrichtung nach einem der Ansprüche 7 bis 9, dadurch gekennzeichnet, daß die Wanne (2) auf einem Fahrgestell (3) befestigt ist und eine Anhängekupplung (82) aufweist.

FIG.1

FIG.2

FIG.3